# EUROPÄISCHE PATENTSCHRIFT

(11) **EP 2 963 394 B1**
(45) Veröffentlichungstag und Bekanntmachung des Hinweises auf die Patenterteilung: **08.06.2016**
(21) Anmeldenummer: 14175283.2
(22) Anmeldetag: 01.07.2014
(51) Int. Cl.: G01D 5/38

(54) **Vorrichtung und Verfahren zur diffraktiven Messung eines Drehwinkels**
Device and method for diffractive measurement of an angle of rotation
Dispositif et procédé de mesure diffractive d'un angle de rotation

(43) Veröffentlichungstag der Anmeldung: 06.01.2016
(73) Patentinhaber: SICK STEGMANN GmbH, 78166 Donaueschingen (DE)
(72) Erfinder: Hopp, Dr. David, 78166 Donaueschingen (DE)
(74) Vertreter: Ludewigt, Christoph

(56) Entgegenhaltungen:
- EP-B1- 0 262 349
- US-A- 5 652 426
- US-A- 5 880 839

## Beschreibung

Die vorliegende Erfindung betrifft eine Vorrichtung zur diffraktiven Messung eines Drehwinkels zweier relativ zueinander drehender Objekte gemäß Anspruch 1 und ein Verfahren zur diffraktiven Messung eines Drehwinkels gemäß den Ansprüchen 10 oder 11.

Generell sind diffraktive Positionsmesssysteme mit hohen Auflösungen naturgemäß entsprechend empfindlich gegenüber mechanischen Relativbewegungen. D.h. je höher die Auflösung, desto engere mechanische Toleranzen müssen eingehalten werden, um die Messgenauigkeit nicht zu beeinträchtigen.

Aus der EP 0 262 349 B1 ist eine lichtelektrische Winkelmesseinrichtung gemäß dem Oberbegriff des Anspruchs 1 bekannt, die mit dem Prinzip der diffraktiven Messung einen Drehwinkel hochauflösen und messgenau bestimmt.

Hierbei wird ein ausgesendeter Lichtstrahl in zwei Beugungsstrahlen mit entgegengesetzter Ordnung geteilt und nach mehrmaliger Umlenkung unter den gleichen Beugungswinkeln wieder vereint, so dass aufgrund von gegenläufigen diffraktiven Effekten, wie z.B. einem gegenläufigen Phasenversatz zweier Signale, eine Selbstkompensation stattfindet.

Diese Form der Kompensation erlaubt allerdings lediglich einen Versatz von einer Signalperiodenlänge, was bei diffraktiven Systemen die Kompensation nur für sehr kleine mechanische Toleranzen bedeutet.

Bei großen mechanischen Toleranzen kann ein Winkelfehler größer als eine Signalperiodenlänge werden, so dass die obige Kompensation zu Sprüngen im Winkelsignal und somit zur Verschlechterung der Genauigkeit der Winkelmess-einrichtung führen kann.

Es ist daher eine Aufgabe der vorliegenden Erfindung, eine Vorrichtung und ein Verfahren zur diffraktiven Messung eines Drehwinkels zweier relativ zueinander drehender Objekte derart zu verbessern, dass eine Kompensation verhältnismäßig großer mechanischer Toleranzen bei gleichzeitig hoher diffraktiver Winkelauflösung erzielbar ist.

Die Aufgabe wird erfindungsgemäß durch eine Vorrichtung zur diffraktiven Messung eines Drehwinkels zweier relativ zueinander drehender Objekte, umfassend zumindest eine Lichtquelle, die Licht aussendet, zwei gegenüber der Lichtquelle ortsfeste Beugungsgitterpaare, eine zu der Lichtquelle relativ drehende und von den Lichtstrahlen radial durchsetzte zylindrische Maßverkörperung, zumindest zwei photo-empfindliche Empfänger zum Empfangen der Lichtstrahlen, und eine Auswerteeinheit, wobei das ausgesendete Licht zu zwei quer zueinander verlaufenden Lichtstrahlen mit jeweiligen Strahlungsrichtungen zuteilbar ist, wobei die Lichtstrahlen je nach Ort entlang der Strahlungsrichtungen Beugungsstrahlen der +1-ten und -1-ten Ordnungen oder Interferenzstrahlen umfassen, wobei das erste Beugungsgitterpaar von dem ersten Lichtstrahl und das zweite Beugungsgitterpaar von dem zweiten Lichtstrahl durchsetzt sind, die zylindrische Maßverkörperung zumindest ein erstes und zweites entlang eines Umfangs der Maßverkörperung angeordnetes Beugungsgitter umfasst, wobei das erste Beugungsgitter der Maßverkörperung eine erste Gitterperiode und das zweite Beugungsgitter der Maßverkörperung eine zu der ersten Gitterperiode verschiedene zweite Gitterperiode aufweist, wobei jeweils ein Empfänger den Interferenzstrahlen eines Lichtstrahls zugeordnet ist und bei Drehung der Maßverkörperung zwei Signale mit unterschiedlichen Auflösungen aus den jeweiligen Interferenzstrahlen generierbar sind, und die Auswerteeinheit vorgesehen ist, zum Vergleichen der Signale zur Kompensation eines Signalfehlers und zum Ermitteln des Drehwinkels.

Gemäß einem bevorzugten Ausführungsbeispiel sind das erste und zweite Beugungsgitter als erste und zweite Maßspur auf der zylindrischen Maßverkörperung vorgesehen, und wobei die erste und zweite Maßspur ineinander verschachtelt angeordnet sind, d.h. auf eine gleiche Höhe an der zylindrischen Maßverkörperung. Hierdurch ergibt sich der Vorteil, dass zwei unterschiedliche Periodizitäten auf engem Raum auf der Maßverkörperung vorgesehen werden können. Ferner wird insbesondere durch die gleiche Höhe der beiden verschachtelten Maßspuren eine perfekte Symmetrie des Winkelfehlers erreicht, wodurch eine ideale Korrektur einer Verkippung der zylindrischen Maßverkörperung ermöglicht ist.

Vorteilhafterweise sind die Maßspuren auf der inneren Umfangswand der zylindrischen Maßverkörperung vorgesehen. Dadurch ist eine einfache Herstellung der zylindrischen Maßverkörperung möglich, da das die Maßspuren bildende Licht nicht durch das Material der zylindrischen Maßverkörperung dringen muss.

Gemäß einem weiteren bevorzugten Ausführungsbeispiel ist die erste Gitterperiode des ersten Beugungsgitters kleiner als die zweite Gitterperiode des zweiten Beugungsgitters, so dass das erste Beugungsgitter ein hochaufgelöstes Signal und das zweite Beugungsgitter ein geringer aufgelöstes Signal erzeugen.

Dies hat den Vorteil, dass eine maximale Phasenverschiebung bzw. ein maximal zulässiger Winkelfehler von der Periodenlänge des hochaufgelösten Signals auf die Periodenlänge des geringer aufgelösten Signals erweitert werden kann, da die Periodenlänge des geringer aufgelösten Signals wesentlich größer als die Periodenlänge des hochaufgelösten Signals ist.

Gemäß einem weiteren bevorzugten Ausführungsbeispiel weisen das erste und zweite Beugungsgitterpaar jeweils ein Beugungsgitter zum Beugen des ausgesendeten Lichts in den Beugungsstrahlen der +1-ten und -1-ten Ordnungen und ein Rekombinationsgitter zum Vereinen der Beugungsstrahlen zu den Interferenzstrahlen oder jeweils zwei Beugungsgitter zum Beugen des ausgesendeten Lichts in Beugungsstrahlen der +1-ten und -1-ten Ordnungen auf.

Gemäß einem weiteren bevorzugten Ausführungsbeispiel sind zwei Lichtquellen zum Aussenden der Lichtstrahlen oder ein Strahlteiler, der das ausgesendete Licht der Lichtquelle in die Lichtstrahlen teilt, und zwei Spiegel, die die Lichtstrahlen in Richtung der Empfänger spiegeln, vorgesehen. Vorteilhafterweise sind die zwei Lichtquellen oder die zwei Spiegel derart zueinander angeordnet, dass die zwei Strahlungsrichtungen der Lichtstrahlen bzw. die optischen Achsen der Lichtstrahlen sich im Innern der Maßverkörperung senkrecht kreuzen.

Gemäß einem weiteren bevorzugten Ausführungsbeispiel weisen entweder das Beugungsgitter oder das Rekombinationsgitter der Beugungsgitterpaare zumindest zwei phasenversetzte Gitterperioden auf. D.h. wenn das Beugungsgitter der Beugungsgitterpaare zwei phasenversetzte Gitterperioden aufweist, weist das zugehörige Rekombinationsgitter der Beugungsgitterpaare ein einziges, flächiges Gitter auf, oder vice versa.

Gemäß einem weiteren bevorzugten Ausführungsbeispiel sind das Beugungsgitter und das Rekombinationsgitter des jeweiligen Beugungsgitterpaares in einem definierten Abstand von den ersten und zweiten Beugungsgittern angeordnet und/oder das Beugungsgitter (BG2, BG2A) und das Rekombinationsgitter (RE2, RE2A) des jeweiligen ersten und zweiten Beugungsgitterpaares (BP2, BP2A) weisen geeignete Gitterperiode zur geometrischen Lenkung der Lichtstrahlen (L2, L2A) zueinander auf. Hieraus ergibt sich der Vorteil, dass eine flexible Anpassung der Vorrichtung ermöglicht ist, um eine Optimierung der Kompensation zu erzielen. Hierbei können die Abstände so gewählt sein, dass die Beugungsgitterpaare entweder symmetrisch oder asymmetrisch zu der zylindrischen Maßverkörperung angeordnet sind.

Gemäß einem weiteren bevorzugten Ausführungsbeispiel sind das erste und zweite Beugungsgitterpaar außerhalb oder innerhalb der Maßverkörperung angeordnet.

Die Aufgabe wird ferner erfindungsgemäß durch ein Verfahren zur diffraktiven Messung eines Drehwinkels zweier relativ zueinander drehender Objekte gelöst, mit den Schritten Aussenden von Lichtstrahlen mittels zumindest einer Lichtquelle; Beugen der Lichtstrahlen mittels Beugungsgittern, so dass von jedem Lichtstrahl Beugungsstrahlen der +1-ten und -1-ten Ordnungen generiert werden; Bestrahlen einer zylindrischen Maßverkörperung mit den Beugungsstrahlen der +1-ten und -1-ten Ordnungen aus zwei unterschiedlichen Strahlungsrichtungen; Beugen der Beugungsstrahlen der +1-ten und -1-ten Ordnungen mittels zumindest eines ersten und zweiten Beugungsgitters der zylindrischen Maßverkörperung, so dass die Beugungsstrahlen mit einem relativen Phasenversatz erzeugt werden; Vereinigen der Beugungsstrahlen der +1-ten und -1-ten Ordnungen zu jeweiligen Interferenzstrahlen mittels Rekombinationsgittern; Empfangen der vereinten Interferenzstrahlen mittels jeweiligem Empfänger; Erzeugen von Signalen aus den Interferenzstrahlen in Abhängigkeit einer Drehung der Maßverkörperung, so dass Signale mit unterschiedlichen Auflösungen für die jeweiligen Strahlungsrichtungen erzeugt werden; Vergleichen der erzeugten Signale mit unterschiedlichen Auflösungen und der unterschiedlichen Strahlungsrichtungen zueinander zur Kompensation eines Signalfehlers; und Ermitteln des Drehwinkels.

Alternativ wird die Aufgabe erfindungsgemäß durch ein Verfahren zur diffraktiven Messung eines Drehwinkels zweier relativ zueinander drehender Objekte gelöst, mit den Schritten Aussenden von Lichtstrahlen mittels zumindest einer Lichtquelle; radiales Bestrahlen einer zylindrischen Maßverkörperung mit den Lichtstrahlen aus zwei unterschiedlichen Strahlungsrichtungen, so dass von jedem Lichtstrahl mittels eines ersten und zweiten Beugungsgitters Beugungsstrahlen der +1-ten und -1-ten Ordnungen generiert werden; Beugen der Beugungsstrahlen der +1-ten und -1-ten Ordnungen mittels Beugungsgittern, so dass die Beugungsstrahlen der +1-ten und -1-ten Ordnungen sich kreuzen; Vereinigen der Beugungsstrahlen der +1-ten und -1-ten Ordnungen mittels des ersten und zweiten Beugungsgitters zu Interferenzstrahlen; Empfangen der Interferenzstrahlen mittels jeweiligem Empfänger; Erzeugen von Signalen aus den Interferenzstrahlen in Abhängigkeit einer Drehung der Maßverkörperung, so dass Signale mit unterschiedlichen Auflösungen für die jeweiligen Strahlungsrichtungen erzeugt werden; Vergleichen der erzeugten Signale mit unterschiedlichen Auflösungen und der unterschiedlichen Strahlungsrichtungen zueinander zur Kompensation eines Signalfehlers; und Ermitteln des Drehwinkels.

Gemäß einem bevorzugten Ausführungsbeispiel werden durch die unterschiedlichen Strahlungsrichtungen und das erste und zweite Beugungsgitter ein hochaufgelöstes Signal und ein geringer aufgelöstes Signal zu einer Drehung der Maßverkörperung ermittelt.

Gemäß einem weiteren bevorzugten Ausführungsbeispiel werden die zylindrische Maßverkörperung mit zwei Lichtquellen bestrahlt, die in einem vordefinierten Winkel voneinander beabstandet angeordnet sind.

Gemäß einem weiteren bevorzugten Ausführungsbeispiel wird das ausgesendete Licht von einem Strahlteiler auf zwei Spiegeln geteilt und von den zwei Spiegeln aus in den unterschiedlichen Strahlungsrichtungen auf die Maßverkörperung gelenkt.

Gemäß einem weiteren bevorzugten Ausführungsbeispiel wird eine Periode eines geringer aufgelösten Signals mit mehreren Perioden eines hochaufgelösten Signals verglichen, so dass ein großer Signalfehler eindeutig identifiziert wird.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. Hierbei sind gleiche Teile in den Zeichnungen mit den gleichen Bezugszeichen gekennzeichnet. In den Zeichnungen zeigen:
- Fig. 1: eine schematische Darstellung einer erfindungsgemäßen Vorrichtung;
- Fig. 1A: eine schematische Detaildarstellung des Teilungsgitters und Rekombinationsgitters einer Ausführung der erfindungsgemäßen Vorrichtung;
- Fig. 1B: eine schematische Detaildarstellung des Teilungsgitters und Rekombinationsgitters einer weiteren Ausführung der erfindungsgemäßen Vorrichtung;
- Fig. 2: eine schematische Darstellung eines bevorzugten Ausführungsbeispiels der erfindungsgemäßen Vorrichtung;
- Fig. 3: eine schematische Darstellung eines weiteren Ausführungsbeispiels der erfindungsgemäßen Vorrichtung;
- Fig. 4: eine schematische Darstellung einer Phasenverschiebung der auszuwertenden Signale;
- Fig. 5: eine schematische Darstellung der erfindungsgemäßen Maßverkörperung.

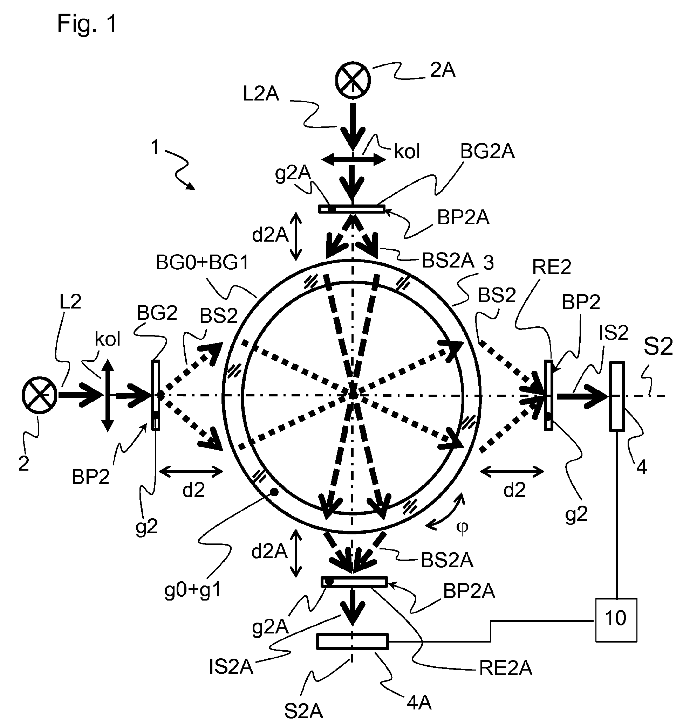

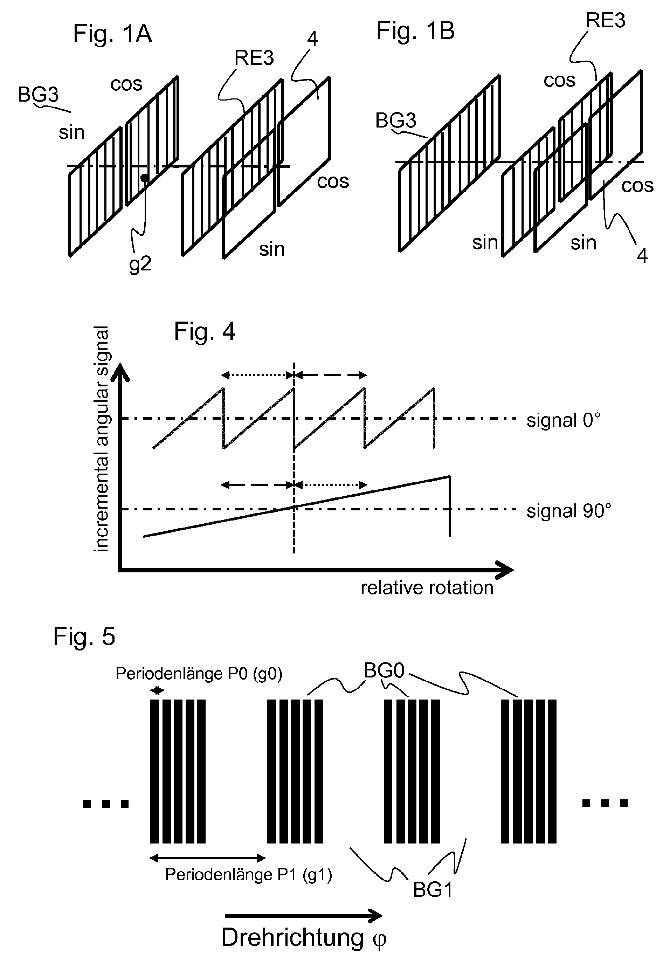

In Figur 1 ist ein Ausführungsbeispiel einer erfindungsgemäßen Vorrichtung 1 zur diffraktiven Messung eines Drehwinkels zweier relativ zueinander drehender Objekte gezeigt, bei der zwei Lichtquellen 2, 2A benutzt werden, um eine relativ zu den Lichtquellen 2, 2A rotierende zylindrische Maßverkörperung 3 im Wesentlichen radial zu bestrahlen.

Hierbei ist die Maßverkörperung 3 mit einer Welle (nicht dargestellt) verbunden bzw. bildet die Maßverkörperung 3 eine Welle, so dass ein Drehwinkel ϕ mit der Vorrichtung 1 bestimmt werden soll.

Folgend wird anhand einer ersten Lichtquelle 2 die radiale Bestrahlung der Maßverkörperung 3 beschrieben. Die radiale Bestrahlung durch die zweite Lichtquelle 2A ist im Wesentlichen analog.

Die erste Lichtquelle 2, die idealerweise eine kohärente ortsfeste Lichtquelle 2 ist, sendet in Richtung der Maßverkörperung 3 Licht aus, das sich in Form eines ersten Lichtstrahls L2 mit einer ersten Strahlungsrichtung S2 ausbreitet. Der ausgesendete erste Lichtstrahl L2 mit einer (mittleren) Wellenlänge wird bevorzugterweise durch ein geeignetes optisches Element kol kollimiert bzw. parallelisiert, so dass kollimiertes Licht auf ein Beugungsgitter BG2 eines ersten zu der ersten Lichtquelle 2 ortsfesten Beugungsgitterpaares BP2 trifft. Das Beugungsgitter BG2 des ersten Beugungsgitterpaares BP2 weist eine Gitterperiode g2 auf, so dass der kollimierte, auf das erste Beugungsgitter BG2 des ersten Beugungsgitterpaares BP2 auftreffende erste Lichtstrahl L2 in Abhängigkeit seiner Wellenlänge und der Gitterperiode g2 in seine Beugungsordnungen aufgespalten wird, so dass sich ein möglichst großer Anteil der Gesamtintensität des ausgesendeten ersten Lichtstrahls L2 in Beugungsstrahlen BS2 der +1-ten und -1-ten Beugungsordnungen befindet.

Die Beugungsstrahlen BS2 der +1-ten und -1-ten Ordnungen breiten sich symmetrisch zu der ersten Strahlungsrichtung S2 des ersten Lichtstrahls L2 in Richtung der Maßverkörperung 3 aus, wo sie auf ein erstes und zweites Beugungsgitter BG0, BG1 der Maßverkörperung 3 treffen. Hierbei treffen die Beugungsstrahlen BS2 der +1-ten und -1-ten Ordnungen unter unterschiedlichen Einfallswinkeln auf die Maßverkörperung 3, so dass sich ein Phasenversatz zwischen den Beugungsstrahlen BS2 ergibt.

Die Beugungsstrahlen BS2 durchsetzen die Maßverkörperung 3 in radialer Richtung, so dass in der ersten Strahlungsrichtung S2 von einem ersten Lichtstrahl L2 bzw. einer optischen Achse des ersten Lichtstrahls L2 gesprochen werden kann, obwohl je nach Ort entlang der ersten Strahlungsrichtung S2 der erste Lichtstrahl L2 Beugungsstrahlen BS2 der +1-ten und -1-ten Ordnungen oder, wie später beschrieben, Interferenzstrahlen IS2 umfasst.

Das erste Beugungsgitter BG0 der Maßverkörperung 3 weist eine erste Gitterperiode g0 auf, die kleiner als die Gitterperiode g2 des Beugungsgitters BG2 des ersten Beugungsgitterpaares BP2 ist, so dass eine stärkere Winkelablenkung der Beugungsstrahlen BS2 der +1-ten und -1-ten Ordnungen erzielbar ist.

Das zweite Beugungsgitter BG1 der Maßverkörperung 3 weist eine zu der ersten Gitterperiode g0 des ersten Beugungsgitters BG0 der Maßverkörperung 3 verschiedene zweite Gitterperiode g1 auf, wobei die erste Gitterperiode g0 des ersten Beugungsgitters BG0 der Maßverkörperung 3 kleiner als die zweite Gitterperiode g1 des zweiten Beugungsgitters BG1 der Maßverkörperung 3 ist, so dass das erste Beugungsgitter BG0 der Maßverkörperung 3 ein hochaufgelöstes detektierbares Signal und das zweite Beugungsgitter BG1 der Maßverkörperung 3 ein geringer aufgelöstes detektierbares Signal liefern.

Hierbei sind das erste und zweite Beugungsgitter BG0, BG1 der Maßverkörperung 3 als erste und zweite Maßspur auf der zylindrischen Maßverkörperung 3 vorgesehen, wobei die erste und zweite Maßspur ineinander verschachtelt angeordnet sind.

D.h. die Maßverkörperung 3 weist vorzugsweise entlang ihrer inneren Umfangfläche zwei Beugungsgitter BG0, BG1 mit unterschiedlichen Periodizitäten auf.

Die Beugungsstrahlen BS2 der +1-ten und -1-ten Ordnungen werden an den ersten und zweiten Beugungsgittern BG0, BG1 der Maßverkörperung 3 derart gebeugt, dass sie sich im Innern der Maßverkörperung 3 kreuzen und auf der gegenüberliegenden Seite der zylindrischen Maßverkörperung 3 erneut auf das erste und zweite Beugungsgitter BG0, BG1 der Maßverkörperung 3 treffen, so dass die Beugungsstrahlen BS2 der +1-ten und -1-ten Ordnungen in Richtung eines Rekombinationsgitters RE2 des ersten Beugungsgitterpaares BP2 gebeugt werden.

Das Rekombinationsgitter RE2 des ersten Beugungsgitterpaares BP2 vereint die Beugungsstrahlen BS2 der +1-ten und -1-ten Ordnungen, so dass die Beugungsstrahlen BS2 der +1-ten und -1-ten Ordnungen als ein Interferenzstrahl IS2 von einem photo-empfindlichen Empfänger 4 detektiert werden.

Hierbei werden vorzugsweise für den ersten Lichtstrahl L2 in der ersten Strahlungsrichtung S2 die Beugungsstrahlen BS2 der +1-ten und -1-ten Ordnungen eines Beugungsgitters BG0 oder BG1 der Maßverkörperung 3 zu dem Rekombinationsgitter RE2 des ersten Beugungsgitterpaares BP2 gebeugt bzw. durchgelassen und die Beugungsstrahlen BS2 der +1-ten und -1-ten Ordnungen des anderen Beugungsgitters BG1 oder BG0 der Maßverkörperung 3 geblockt bzw. derart gelenkt, dass sie den photo-empfindlichen Empfänger 4 nicht treffen.

Zur Vereinfachung sind in den Figuren nur schematisch jeweils die den Empfänger 4 treffenden Beugungsstrahlen der +1-ten und -1-ten Ordnungen eines Beugungsgitters BG0 oder BG1 der Maßverkörperung 3 dargestellt.

Ferner besteht bei diesem erfindungsgemäßen Ausführungsbeispiel das erste zu der ersten Lichtquelle 2 ortsfeste Beugungsgitterpaar BP2 jeweils aus einem Beugungsgitter BG2 und einem Rekombinationsgitter RE2. Hierbei weisen entweder das Beugungsgitter BG2 oder das Rekombinationsgitter RE2 des Beugungsgitterpaares BP2 zumindest zwei phasenversetzte Gitterperioden auf.

Der Verlauf des ausgesendeten ersten Lichtstrahls L2 durch die erfindungsgemäße Vorrichtung 1 ist somit symmetrisch zu der ersten Strahlungsrichtung S2 der ersten Lichtquelle 2, wobei bei der Rekombination der Beugungsstrahlen BS2 der +1-ten und -1-ten Ordnungen durch das Rekombinationsgitter RE2 die Beugungsstrahlen BS2 der +1-ten und -1-ten Ordnungen in Abhängigkeit ihrer Phasendifferenz zu dem Interferenzstrahl IS2 interferieren. Dies führt zu einer phasenabhängigen Intensität im rekombinierten ersten Lichtstrahl L2 bzw. in dem Interferenzstrahl IS2, wobei die Intensität durch den photo-empfindlichen Empfänger 4 erfasst und in ein elektrisches Signal umgewandelt wird.

Bei einer Drehung der Maßverkörperung 3 wird eine Modulation der Phasendifferenz der Beugungsstrahlen BS2 der +1-ten und -1-ten Ordnungen bewirkt. Die Phasendifferenz führt zu einer Modulation der resultierenden Intensität bei der Rekombination bzw. bei der Interferenz der Beugungsstrahlen BS2 der +1-ten und -1-ten Ordnungen und damit zu einer Modulation des elektrischen Signals. Die sinusförmig verlaufende Modulation kann direkt als inkrementales Winkelsignal verwendet werden.

Um eine ausreichende Ermittlung des inkrementalen Winkelsignals zu gewährleisten, wird, wie in den Figuren 1A oder 1B in schematischer Detaildarstellung gezeigt, mindestens eine zweite versetzte Phasenlage implementiert.

Die Figuren 1A und 1B zeigen zwei unterschiedliche Ausführungsbeispiele der erfindungsgemäßen Vorrichtung.

Bei dem Ausführungsbeispiel in der Figur 1A weist das Beugungsgitter BG2 des ersten Beugungsgitterpaares BP2 neben der Gitterperiode g2 mit der SinusPhasenlage eine Gitterperiode g2 mit einer Cosinus-Phasenlage auf. Das Rekombinationsgitter RE2 des ersten Beugungsgitterpaares BP2 weist entgegen des Beugungsgitters BG2 des ersten Beugungsgitterpaares BP2 ein einziges, flächiges Gitter mit der Gitterperiode g2 auf. Für jede Phasenlage der Gitterperiode g2 des Beugungsgitters GB2 wird entsprechend ein räumlich separater photoempfindlicher Empfänger 4 vorgesehen.

In der Figur 1B ist ein anderes Ausführungsbeispiel gezeigt, bei dem die obige Konfiguration entgegengesetzt ausgeführt ist. D.h. das Beugungsgitter BG2 weist das einheitliche, flächige Gitter mit der Gitterperiode g2 auf und das Rekombinationsgitter RE2 hat die zwei Gitter mit der Sinus- und CosinusPhasenlage.

Hierdurch lassen sich beliebig weitere zusätzliche Phasenlagen implementieren, so dass prinzipiell eine beliebige Anzahl beliebiger Phasenlagen erzeugt und detektiert werden kann. Die Wahl von sin, cos, -sin und -cos, d.h. 0°, 90°, 180° und 270°, erlaubt dabei eine einfache Auswertung mit zusätzlicher Kompensation des Gleichlichtanteils (Offset) durch Bildung von Differenzsignalen.

Gemäß dem erfindungsgemäßen, in der Figur 1 gezeigten Ausführungsbeispiel wird die obige beschriebene Bestrahlung der Maßverkörperung 3 der Vorrichtung 1 durch eine zweite Lichtquelle 2A durchgeführt, die vorzugsweise 90° versetzt zu der ersten Lichtquelle 2 in Umfangsrichtung der zylindrischen Maßverkörperung 3 angeordnet ist.

Der ausgesendete zweite Lichtstrahl L2A mit einer zweiten Strahlungsrichtung S2A der zweiten Lichtquelle 2A wird ebenfalls bevorzugterweise durch ein optisches Element kol kollimiert bzw. parallelisiert und von einem Beugungsgitter BG2A eines zweiten Beugungsgitterpaares BP2A in Beugungsstrahlen BS2A der +1-ten und -1-ten Ordnungen geteilt.

Die Beugungsstrahlen BS2A der +1-ten und -1-ten Ordnungen der zweiten Lichtquelle 2A durchlaufen die erfindungsgemäße Vorrichtung 1 analog wie die Beugungsstrahlen BS2 der +1-ten und -1-ten Ordnungen des ersten Lichtstrahls L2 der ersten Lichtquelle 2, so dass die Beugungsstrahlen BS2A der +1-ten und -1-ten Ordnungen auf der gegenüberliegenden Seite der Maßverkörperung 3 durch ein Rekombinationsgitter RE2A des zweiten Beugungsgitterpaares BP2A, das ebenfalls aus dem Beugungsgitter BG2A und dem Rekombinationsgitter RE2A besteht, zu einem Interferenzstrahl IS2A vereint und durch einen weiteren photo-empfindlichen Empfänger 4A detektiert werden.

Somit sind erfindungsgemäß das erste und zweite zu den Lichtquellen 2, 2A ortsfeste Beugungsgitterpaar BP2, BP2A derart zueinander angeordnet, dass die Beugungsgitterpaare BP2, BP2A in den jeweiligen Lichtstrahlen L2, L2A liegen und die erste Strahlungsrichtung S2 der ersten Lichtquelle 2 sich vorzugsweise senkrecht zu der zweiten Strahlungsrichtung S2A der zweiten Lichtquelle 2A kreuzen, so dass die zylindrische Maßverkörperung 3 der erfindungsgemäßen Vorrichtung 1 aus zwei unterschiedlichen Strahlungsrichtungen S2, S2A bestrahlt wird.

Entlang des zweiten Lichtstrahls L2A der zweiten Lichtquelle 2A in Richtung der zweiten Strahlungsrichtung S2A sind durch die zwei Beugungsgitter BG0, BG1 der Maßverkörperung 3 somit ebenfalls ein hochaufgelöstes und ein geringer aufgelöstes Signals detektierbar.

Im Gegensatz zu der oben beschriebenen Anordnung für den ersten Lichtstrahl L2 der ersten Lichtquelle 2 werden bei der Anordnung für den zweiten Lichtstrahl L2A der zweiten Lichtquelle 2A die Beugungsstrahlen BS2A der +1-ten und -1-ten Ordnungen des anderen Beugungsgitters BG1 oder BG0 der Maßverkörperung 3 zu dem Empfänger 4 durchgelassen.

D.h. wenn z.B. für die erste Lichtquelle 2 die Beugungsstrahlen BS2 der +1-ten und -1-ten Ordnungen des ersten Beugungsgitters BG0 der Maßverkörperung 3 am Rekombinationsgitter RE2 des ersten Beugungsgitterpaares BP2 rekombiniert und die Beugungsstrahlen BS2 der +1-ten und -1-ten Ordnungen des zweiten Beugungsgitters BG1 der Maßverkörperung 3 vor dem Rekombinationsgitter RE2 geblockt werden, dann werden für die zweite Lichtquelle 2A genau entgegengesetzt die Beugungsstrahlen BS2A der +1-ten und -1-ten Ordnungen des ersten Beugungsgitters BG0 der Maßverkörperung 3 vor dem Rekombinationsgitter RE2A des zweiten Beugungsgitterpaares BP2A geblockt und die Beugungsstrahlen BS2A der +1-ten und -1-ten Ordnungen des zweiten Beugungsgitters BG1 der Maßverkörperung 3 am Rekombinationsgitter RE2A rekombiniert, oder vice versa.

In diesem Zusammenhang ist erfindungsgemäß das Blocken der Beugungsstrahlen BS2, BS2A ein Verhindern des Detektierens der Beugungsstrahlen BS2, BS2A durch den Empfänger 4. Dies kann durch eine Blende oder eine geeignete räumliche Ausdehnung des Empfängers 4 erzielt werden.

Ein Winkelfehler bei mechanischer Asymmetrie der Vorrichtung 1 besitzt eine Kosinus- bzw. Sinus-Quadrat-Charakteristik, d.h. der Winkelfehler ist immer genau zwischen den Achsen 0° und 90° am größten. Durch die erfindungsgemäße Bestrahlung der Maßverkörperung 3 verhält sich der Winkelfehler für beide Strahlungsrichtungen S2, S2A relativ phasenverschoben.

Dies bedeutet, dass der Verlauf des Winkelfehlers bei der Drehung ϕ der Maßverkörperung 3 für die beiden Strahlungsrichtungen S2, S2A gegenläufig und absolut gleich groß ist. Werden nun die Winkelsignale der einen Strahlungsrichtung S2 in Abhängigkeit von der einen Gitterperiode g0 und der anderen Strahlungsrichtung S2A in Abhängigkeit von der zweiten Gitterperiode g1 detektiert und miteinander verglichen, so können diese beiden fehlerbehafteten Winkelsignale gemittelt werden, um den wahren Drehwinkel zu ermitteln. Der Phasenfehler kompensiert sich dabei zu jeder Drehstellung.

D.h. z.B., dass bei einem lateralen Versatz der Maßverkörperung 3 gegenüber einer Lichtquelle 2, 2A detektiert die Anordnung der anderen Lichtquelle 2A, 2 diesen lateralen Versatz und kann somit den Winkelfehler identifizieren. Würde der laterale Versatz gegenüber beiden Lichtquellen 2, 2A erfolgen, so würde sich der Winkelfehler für die erfindungsgemäße Anordnung gegenläufig ausprägen und dadurch auskompensieren.

Ferner werden erfindungsgemäß durch die beiden ineinander verschachtelten Maßspuren, wie in Figur 5 dargestellt, auf der Maßverkörperung 3 zwei unterschiedlich aufgelöste Winkelsignale detektiert.

Hierbei hat das erste Beugungsgitter BG0 die hochaufgelöste Gitterperiode g0 mit der Periodenlänge P0 und das zweite Beugungsgitter BG1 die niedriger aufgelöste Gitterperiode g1 mit der Periodenlänge P1.

Erfindungsgemäß ermittelt eine Auswerteinheit 10 die Drehwinkelsignale aus den Signalen der zwei empfangenen Lichtstrahlen L2, L2A. Hierbei stellen die Empfänger 4, 4A, wie oben beschrieben, aus den Interferenzstrahlen IS2, IS2A ein hochaufgelöstes und ein geringer aufgelöstes Signal zur Verfügung, die von der Auswerteeinheit 10 verglichen werden.

Die Auswerteeinheit 10 vergleicht die Signale mit unterschiedlichen Auflösungen der Lichtstrahlen L2, L2A miteinander, so dass die Auswerteeinheit 10 ein fehlerkompensiertes Drehwinkelsignal ausgeben kann.

Gemäß dem beschriebenen Ausführungsbeispiel vergleicht die Auswerteeinheit 10 das geringer aufgelöste Signal des ersten Beugungsgitters BG0 der Maßverkörperung 3 mit der kleinen Periodenlänge P0 mit dem hochaufgelösten Signal des zweiten Beugungsgitters BG1 der Maßverkörperung 3 mit der größeren Periodenlänge P1.

D.h. insbesondere bei der Auswertung ist ein Drehwinkelsignal hochauflösend, das zweite Drehwinkelsignal besitzt eine geringere Auflösung, so dass eine Periodenlänge des geringer aufgelösten Drehwinkelsignals mehrere Periodenlängen des hochaufgelösten Drehwinkelsignals umfasst. Hierdurch kann im Rahmen der längeren Periode des geringer aufgelösten Drehwinkelsignals eine eindeutige Identifikation der kürzeren Perioden des hochaufgelösten Drehwinkelsignals erfolgen.

Liegt nun ein Phasenfehler der Drehwinkelsignale vor, so verhält sich dieser, wie beschrieben und in Figur 4 als gepunktete oder gestrichelte Linie gezeigt, für die beiden Drehwinkelsignale gegenläufig, aber dennoch absolut gleich groß, d.h. die gegenläufige Verschiebung der Phasen geschieht um den gleichen absoluten Betrag. Eine große Verschiebung der Phase, also ein großer Winkelfehler, führt zu einem Sprung der Periode im hochaufgelösten Drehwinkelsignal, im geringer aufgelösten Drehwinkelsignal jedoch bewegt sich diese große Phasenverschiebung innerhalb einer Periode. Damit wird die maximale Phasenverschiebung bzw. der maximal zulässige Winkelfehler von der Periodenlänge P1 des hochaufgelösten Drehwinkelsignals auf die Periodenlänge P0 des geringer aufgelösten Drehwinkelsignals erweitert. Es können damit wesentlich größere mechanische Toleranzen zugelassen werden.

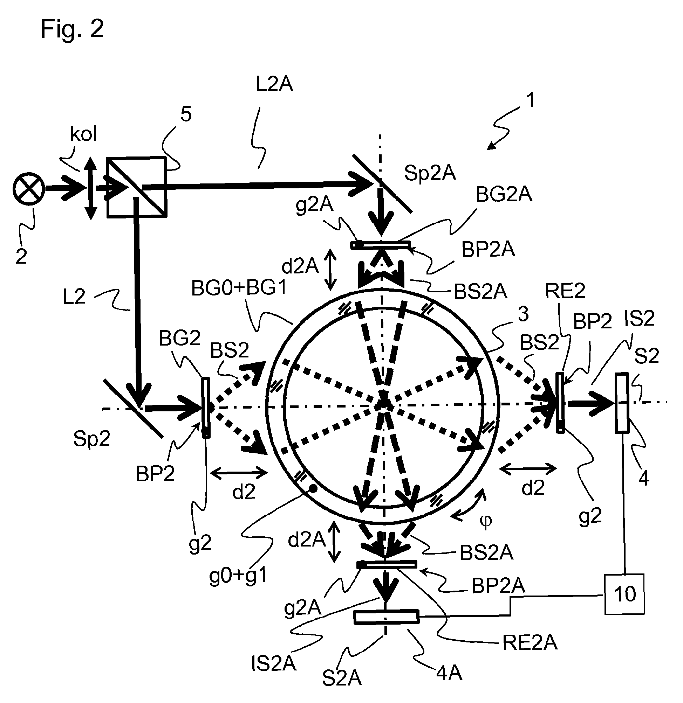

Alternativ zu dem oben beschriebenen Ausführungsbeispiel zeigt Figur 2 ein erfindungsgemäßes Ausführungsbeispiel der Vorrichtung 1, bei dem eine einzige Lichtquelle 2 verwendet wird.

Wie bei dem vorherigen Ausführungsbeispiel wird das ausgesendete Licht bevorzugterweise durch ein geeignetes optisches Element kol kollimiert bzw. paralleli-siert. Das kollimierte bzw. parallelisierte Licht trifft auf einen Strahlteiler 5, der das ausgesendete Licht in zwei Lichtstrahlen L2, L2A aufteilt.

Mittels zweier Spiegel Sp1, Sp2 werden die aufgeteilten Lichtstrahlen L2, L2A jeweils, wie im ersten Ausführungsbeispiel, auf die Maßverkörperung 3 aus unterschiedlichen Strahlungsrichtungen S2, S2A gelenkt, so dass die Maßverkörperung 3 radial aus zwei Strahlungsrichtungen S2, S2A bestrahlt wird. Hierbei breiten sich die Lichtstrahlen L2, L2A entlang der Strahlungsrichtungen S2, S2A derart aus, so dass sich die Lichtstrahlen L2, L2A im Innern der Maßverkörperung 3 in einem bevorzugten Winkel von 90° kreuzen.

Der nachfolgende Verlauf der Lichtstrahlen L2, L2A und die Bestimmung der Drehwinkelsignale entsprechen der obigen Beschreibung des Ausführungsbeispiels gemäß der Figur 1.

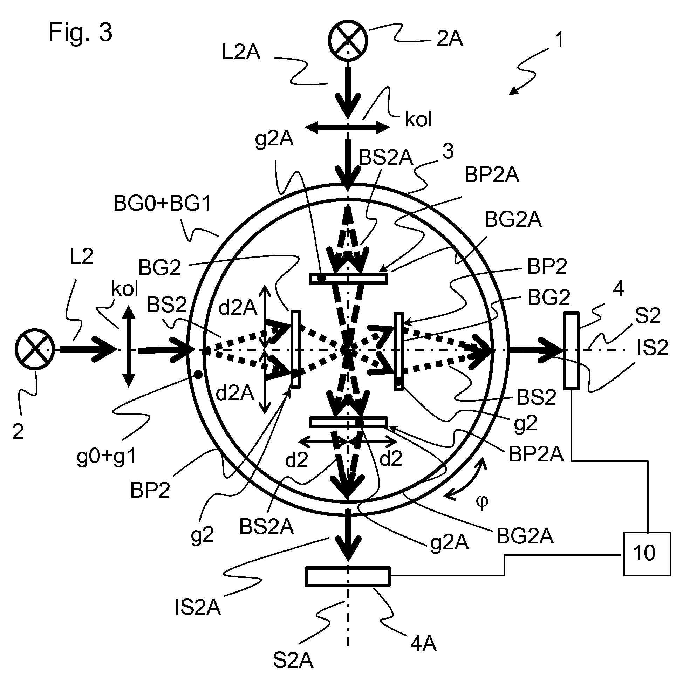

Figur 3 zeigt ein weiteres erfindungsgemäßes Ausführungsbeispiel der Vorrichtung 1.

Anders als beim ersten und zweiten Ausführungsbeispiel der Vorrichtung 1, wie in Figur 1 und 2 gezeigt, sind das erste und zweite gegenüber der Lichtquellen 2, 2A ortsfeste Beugungsgitterpaar BP2, BP2A innerhalb der zylindrischen Maßverkörperung 3 angeordnet, so dass die erste Beugung der von den zwei Lichtquellen 2, 2A ausgesendeten Lichtstrahlen L2, L2A in die Beugungsstrahlen BS2, BS2A der +1-ten und -1-ten Ordnungen durch das erste und zweite Beugungsgitter BG0, BG1 der Maßverkörperung 3 mit der ersten und zweiten Gitterperiode g0, g1 erfolgt.

Für jede Strahlungsrichtung S2, S2A ergeben sich jeweils ein später durch die jeweiligen Empfänger 4, 4A erfasstes, hochaufgelöstes und ein geringer aufgelöstes Winkelsignal aus einem Beugungsstrahlen BS2, BS2A der +1-ten und -1-ten Ordnungen. Die Beugungsstrahlen BS2 der +1-ten und -1-ten Ordnungen werden im weiteren Verlauf an den jeweiligen Beugungsgittern BG2, BG2A der ersten und zweiten Beugungsgitterpaare BP2, BP2A gebeugt, so dass sich die Beugungsstrahlen BS2, BS2A der +1-ten und -1-ten Ordnungen der Beugungsgitterpaare BP2, BP2A vorzugsweise in der Mitte der Maßverkörperung 3, kreuzen.

Die ersten und zweiten Beugungsgitterpaare BP2, BP2A weisen jeweils ein weiteres zu dem anderen Beugungsgitter BG2, BG2A identisches Beugungsgitter BG2, BG2A auf, so dass die Beugungsstrahlen BS2, BS2A der +1-ten und -1-ten Ordnungen Richtung der Wand der Maßverkörperung 3 erneut gebeugt werden.

D.h. bei diesem Ausführungsbeispiel bestehen die ersten und zweiten Beugungsgitterpaare BP2, BP2A jeweils aus zwei Beugungsgittern BG2, BG2A.

Hierbei sind die Abstände d2, d2A zwischen den jeweiligen Beugungsgittern BG2, BG2A der ersten und zweiten Beugungsgitterpaare BP2, BP2A derart gewählt, dass das Kreuzen der Lichtstrahlen L2, L2A bzw. der Beugungsstrahlen BS2, BS2A der +1-ten und -1-ten Ordnungen in der Mitte der Maßverkörperung 3 ermöglicht werden.

Bei diesem Ausführungsbeispiel vereinigen das erste und zweite Beugungsgitter BG0, BG1 der Maßverkörperung 3 die Beugungsstrahlen BS2, BS2A der +1-ten und -1-ten Ordnungen, so dass jeweils ein Interferenzstrahl IS2, IS2A auf die zugeordneten Empfänger 4, 4A trifft. Somit übernehmen das erste und zweite Beugungsgitter BG0, BG1 der Maßverkörperung 3 die Funktion der Rekombinationsgitter RE2, RE2A der beiden vorherigen Ausführungsbeispiele.

Anhand der gekreuzten Strahlenrichtungen S2, S2A und der verschiedenen Periodenlängen P0, P1 der Beugungsgitter g0, g1 der Maßverkörperung 3 ist die erfindungsgemäße Vorrichtung 1 in der Lage, ein hochauflösendes und fehlerkompensiertes diffraktives Winkelmesssystem mit hohen mechanischen Toleranzen bereitzustellen.

Vorteilhafterweise können alle verwendeten Beugungsgitter BG0, BG1, BG2, BG2A als Phasengitter oder Amplitudengitter realisiert werden, wobei eine beliebige Mischung der Gittertypen auch anwendungsspezifisch sein kann.

Ferner können sich das erste und zweite Beugungsgitter BG0, BG1 der Maßverkörperung 3 auf einer äußeren Zylindermantelfläche oder auf einer inneren Zylindermantelfläche der Maßverkörperung 3 befinden, so dass ein Aufbau der Vorrichtung 1 zweckgebunden optimiert werden kann. Hierbei ist auf Grund einer vereinfachten Herstellung der Maßverkörperung 3 das Vorsehen der Maßspuren auf der inneren Zylindermantelfläche bevorzugt.

Weiterhin können auf der Zylindermantelfläche der Maßverkörperung 3 mehrere Beugungsgitter in axialer Richtung der Maßverkörperung 3 verteilt parallel zueinander vorgesehen sein, so dass in mehreren Ebenen Signale ermittelt werden können, die eine noch genauere Bestimmung des Drehwinkels oder eine Bestimmung verschiedener Parameter ermöglichen können.

Die eingesetzte Lichtquelle 2, 2A kann unpolarisiert, teilpolarisiert oder vollständig polarisiert sein.

### Bezugszeichenliste

- 1: Vorrichtung
- 2, 2A: Lichtquelle
- 3: Maßverkörperung
- 4, 4A: Empfänger
- 5: Strahlteiler
- 10: Auswerteeinheit
- S2, S2A: Strahlungsrichtung
- BG0, BG1, BG2, BG2A: Beugungsgitter
- BP2, BP2A: Beugungsgitterpaar
- BS2, BS2A: Beugungsstrahl
- d2, d2A: Abstand
- g0, g1, g2, g2A: Gitterperiode
- IS2, IS2A: Interferenzstrahl
- kol: Optisches Element
- L2, L2A: Lichtstrahl
- P0, P1: Periodenlänge
- RE2, RE2A: Rekombinationsgitter
- Sp1, Sp2: Spiegel
- ϕ: Drehung

## Patentansprüche

1. Vorrichtung (1) zur diffraktiven Messung eines Drehwinkels zweier relativ zueinander drehender Objekte, umfassend
zumindest eine Lichtquelle (2, 2A), die Licht aussendet,
zwei gegenüber der Lichtquelle (2, 2A) ortsfeste Beugungsgitterpaare (BP2, BP2A),
eine zu der Lichtquelle (2, 2A) relativ drehende und von den Lichtstrahlen (L2, L2A) radial durchsetzte zylindrische Maßverkörperung (3),
zumindest zwei photo-empfindliche Empfänger (4, 4A) zum Empfangen der Lichtstrahlen (L2, L2A), und
eine Auswerteeinheit (10), **dadurch gekennzeichnet, dass** das ausgesendete Licht zu zwei quer zueinander verlaufenden Lichtstrahlen (L2, L2A) mit jeweiligen Strahlungsrichtungen (S2, S2A) zuteilbar ist, wobei die Lichtstrahlen (L2, L2A) je nach Ort entlang der Strahlungsrichtungen (S2, S2A) Beugungsstrahlen (BS2, BS2A) der +1-ten und -1-ten Ordnungen oder Interferenzstrahlen (IS2, IS2A) umfassen,
wobei das erste Beugungsgitterpaar (BP2) von dem ersten Lichtstrahl (L2) und das zweite Beugungsgitterpaar (BP2A) von dem zweiten Lichtstrahl (L2A) durchsetzt sind,
die zylindrische Maßverkörperung (3) zumindest ein erstes und zweites entlang eines Umfangs der Maßverkörperung (3) angeordnetes Beugungsgitter (BG0, BG1) umfasst, wobei das erste Beugungsgitter (BG0) der Maßverkörperung (3) eine erste Gitterperiode (g0) und das zweite Beugungsgitter (BG1) der Maßverkörperung (3) eine zu der ersten Gitterperiode (g0) verschiedene zweite Gitterperiode (g1) aufweist,
wobei jeweils ein Empfänger (4, 4A) den Interferenzstrahlen (IS2, IS2A) eines Lichtstrahls (L2, L2A) zugeordnet ist und bei Drehung der Maßverkörperung (3) zwei Signale mit unterschiedlichen Auflösungen aus den jeweiligen Interferenzstrahlen (IS2, IS2A) generierbar sind, und
die Auswerteeinheit (10) vorgesehen ist, zum Vergleichen der Signale zur Kompensation eines Signalfehlers und zum Ermitteln des Drehwinkels.

2. Vorrichtung (1) nach Anspruch 1, **dadurch gekennzeichnet, dass** das erste und zweite Beugungsgitter (BG0, BG1) als erste und zweite Maßspur auf der zylindrischen Maßverkörperung (3) vorgesehen sind, und wobei die erste und zweite Maßspur ineinander verschachtelt angeordnet sind.

3. Vorrichtung (1) nach Anspruch 1 oder 2, **dadurch gekennzeichnet, dass** die erste Gitterperiode (g0) des ersten Beugungsgitters (BG0) kleiner ist als die zweite Gitterperiode (g1) des zweiten Beugungsgitters (BG1), so dass das zweite Beugungsgitter (BG1) ein hochaufgelöstes Signal und das erste Beugungsgitter (BG1) ein geringer aufgelöstes Signal erzeugen.

4. Vorrichtung (1) nach zumindest einem der vorhergehenden Ansprüche, **dadurch gekennzeichnet, dass** das erste und zweite Beugungsgitterpaar (BP2, BP2A) jeweils ein Beugungsgitter (BG2, BG2A) zum Beugen des ausgesendeten Lichts in den Beugungsstrahlen (BS2, BS2A) der +1-ten und -1-ten Ordnungen und ein Rekombinationsgitter (RE2, RE2A) zum Vereinen der Beugungsstrahlen (BS2, BS2A) zu den Interferenzstrahlen (IS2, IS2A) oder jeweils zwei Beugungsgitter (BG2, BG2A) zum Beugen des ausgesendeten Lichts in Beugungsstrahlen (BS2, BS2A) der +1-ten und -1-ten Ordnungen aufweist.

5. Vorrichtung (1) nach zumindest einem der vorhergehenden Ansprüche, **dadurch gekennzeichnet, dass** zwei Lichtquellen (2, 2A) zum Aussenden der Lichtstrahlen (L2, L2A) oder ein Strahlteiler (5), der das ausgesendete Licht der Lichtquelle (2) in die Lichtstrahlen (L2, L2A) teilt, und zwei Spiegel (Sp1, Sp2), die die Lichtstrahlen (L2, L2A) in Richtung der Empfänger (4, 4A) spiegeln, vorgesehen sind.

6. Vorrichtung (1) nach Anspruch 5, **dadurch gekennzeichnet, dass** die zwei Lichtquellen (2, 2A) oder die zwei Spiegel (Sp1, Sp2) derart zueinander angeordnet sind, dass die zwei Strahlungsrichtungen (S2, S2A) der Lichtstrahlen (L2, L2A) sich im Innern der Maßverkörperung (3) senkrecht kreuzen.

7. Vorrichtung (1) nach Anspruch 4 oder 5, **dadurch gekennzeichnet, dass** entweder das Beugungsgitter (BG2, BG2A) oder das Rekombinationsgitter (RE2, RE2A) der ersten und zweiten Beugungsgitterpaare (BP2, BP2A) zumindest zwei phasenversetzte Gitterperioden (g2, g2A) aufweisen.

8. Vorrichtung (1) nach einem der Ansprüche 4 bis 6, **dadurch gekennzeichnet, dass** das Beugungsgitter (BG2, BG2A) und das Rekombinationsgitter (RE2, RE2A) des jeweiligen ersten und zweiten Beugungsgitterpaares (BP2, BP2A) in einem definierten Abstand (d2, d2A) von den ersten und zweiten Beugungsgittern (BG0, BG1) angeordnet sind und/oder das Beugungsgitter (BG2, BG2A) und das Rekombinationsgitter (RE2, RE2A) des jeweiligen ersten und zweiten Beugungsgitterpaares (BP2, BP2A) geeignete Gitterperioden zur geometrischen Lenkung der Lichtstrahlen (L2, L2A) zueinander aufweisen.

9. Vorrichtung (1) nach einem der vorhergehenden Ansprüche, **dadurch gekennzeichnet, dass** das erste und zweite Beugungsgitterpaar (BP2, BP2A) außerhalb oder innerhalb der Maßverkörperung (3) angeordnet sind.

10. Verfahren zur diffraktiven Messung eines Drehwinkels zweier relativ zueinander drehender Objekte, mit den Schritten:
- Aussenden von Lichtstrahlen (L2, L2A) mittels zumindest einer Lichtquelle (2, 2A);
- Beugen der Lichtstrahlen (L2, L2A) mittels Beugungsgittern (BG2, BG2A), so dass von jedem Lichtstrahl (L2, L2A) Beugungsstrahlen (BS2, BS2A) der +1-ten und -1-ten Ordnungen generiert werden;
- Bestrahlen einer zylindrischen Maßverkörperung (3) mit den Beugungsstrahlen (BS2, BS2A) der +1-ten und -1-ten Ordnungen aus zwei unterschiedlichen Strahlungsrichtungen (S2, S2A);
- Beugen der Beugungsstrahlen (BS2, BS2A) der +1-ten und -1-ten Ordnungen mittels zumindest eines ersten und zweiten Beugungsgitters (BG0, BG1) der zylindrischen Maßverkörperung (3), so dass die Beugungsstrahlen (BS2, BS2A) mit einem relativen Phasenversatz erzeugt werden;
- Vereinigen der Beugungsstrahlen (BS2, BS2A) der +1-ten und -1-ten Ordnungen zu jeweiligen Interferenzstrahlen (IS2, IS2A) mittels Rekombinationsgittern (RE2, RE2A);
- Empfangen der vereinten Interferenzstrahlen (IS2, IS2A) mittels jeweilige Empfänger (4, 4A);
- Erzeugen von Signalen aus den Interferenzstrahlen (IS2, IS2A) in Abhängigkeit einer Drehung der Maßverkörperung (3), so dass Signale mit unterschiedlichen Auflösungen für die jeweiligen Strahlungsrichtungen (S2, S2A) erzeugt werden;
- Vergleichen der erzeugten Signale mit unterschiedlicher Auflösungen und der unterschiedlichen Strahlungsrichtungen (S2, S2A) zueinander zur Kompensation eines Signalfehlers; und
- Ermitteln des Drehwinkels.

11. Verfahren zur diffraktiven Messung eines Drehwinkels zweier relativ zueinander drehender Objekte, mit den Schritten:
- Aussenden von Lichtstrahlen (L2, L2A) mittels zumindest einer Lichtquelle (2, 2A);
- radiales Bestrahlen einer zylindrischen Maßverkörperung (3) mit den Lichtstrahlen (L2, L2A) aus zwei unterschiedlichen Strahlungsrichtungen (S2, S2A), so dass von jedem Lichtstrahl (L2, L2A) mittels eines ersten und zweiten Beugungsgitters (BG0, BG1) Beugungsstrahlen der +1-ten und
- 1-ten Ordnungen generiert werden;
- Beugen der Beugungsstrahlen der +1-ten und -1-ten Ordnungen mittels Beugungsgittern (BG2, BG2A), so dass die Beugungsstrahlen der +1-ten und -1-ten Ordnungen sich kreuzen;
- Vereinigen der Beugungsstrahlen der +1-ten und -1-ten Ordnungen mittels des ersten und zweiten Beugungsgitters (BG0, BG1) zu Interferenzstrahlen (IS2, IS2A);
- Empfangen der Interferenzstrahlen (IS2, IS2A) mittels jeweiliger Empfänger (4, 4A);
- Erzeugen von Signalen aus den Interferenzstrahlen (IS2, IS2A) in Abhängigkeit einer Drehung der Maßverkörperung (3), so dass Signale mit unterschiedlichen Auflösungen für die jeweiligen Strahlungsrichtungen (S2, S2A) erzeugt werden;
- Vergleichen der erzeugten Signale mit unterschiedlichen Auflösungen und der unterschiedlichen Strahlungsrichtungen (S2, S2A) zueinander zur Kompensation eines Signalfehlers; und
- Ermitteln de Drehwinkels.

12. Verfahren nach Anspruch 10 oder 11, wobei durch die unterschiedlichen Strahlungsrichtungen (S2, S2A) und das erste und zweite Beugungsgitter (BG0, BG1) ein hochaufgelöstes Signal und ein geringer aufgelöstes Signal zu einer Drehung der Maßverkörperung (3) ermittelt werden.

13. Verfahren nach zumindest einem der vorhergehenden Ansprüche 10 bis 12, wobei die zylindrische Maßverkörperung (3) mit zwei Lichtquellen (2, 2A) bestrahlt werden, die in einem vordefinierten Winkel von einander beabstandet angeordnet sind.

14. Verfahren nach zumindest einem der vorhergehenden Ansprüche 10 bis 12, wobei das ausgesendete Licht von einem Strahlteiler (5) auf zwei Spiegeln (Sp1, Sp2) geteilt und von den zwei Spiegeln (Sp1, Sp2) aus in den unterschiedlichen Strahlungsrichtungen (S2, S2A) auf die Maßverkörperung (3) gelenkt wird.

15. Verfahren nach einem der vorhergehenden Ansprüche, wobei eine Periode eines geringer aufgelösten Signals mit mehreren Perioden eines hochaufgelösten Signals verglichen wird, so dass ein großer Signalfehler eindeutig identifiziert wird.

## Claims

1. An apparatus (1) for a diffractive measurement of an angle of rotation of two objects rotating relative to one another, comprising
at least one light source (2, 2A) which transmits light;
two diffraction grating pairs (BP2, BP2A) in a fixed position with respect to the light source (2, 2A);
a cylindrical standard (3) rotating relative to the light source (2, 2A) and radially permeated by the light beams (L2, L2A);
at least two photosensitive receivers (4, 4A) for receiving the light beams (L2, L2A); and
an evaluation unit (10), **characterized in that**
the transmitted light can be allocated to two light beams (L2, L2A) extending transversely to one another and having respective directions of irradiation (S2, S2A), with the light beams (L2, L2A) comprising +1st and - 1 st order diffraction beams (BS2, BS2A) or interference beams (IS2, IS2A) depending on the location along the directions of radiation (S2, S2A);
with the first diffraction grating pairs (BP2) being permeated by the first light beam (L2) and the second diffraction grating pair (BP2A) being permeated by the second light beam (L2A);
**in that** the cylindrical standard (3) comprises at least one first and one second diffraction grating (BG0, BG1) arranged along a periphery of the standard (3), with the first diffraction grating (BG0) of the standard (3) having a first grating period (g0) and the second diffraction grating (BG1) of the standard (3) having a second grating period (g1) different from the first grating period (g0);
with a respective receiver (4, 4A) being associated with the interference beams (IS2, IS2A) of a light beam (L2, L2A) and with two signals having different resolutions being able to be generated from the respective interference beams (IS2, IS2A) on a rotation of the standard (3); and
**in that** the evaluation unit (10) is provided for comparing the signals for compensating a signal error and for determining the angle of rotation.

2. An apparatus (1) in accordance with claim 1, **characterized in that** the first and second diffraction gratings (BG0, BG1) are provided as first and second measuring tracks on the cylindrical standard (3) and with the first and second measuring tracks being arranged interlaced with one another.

3. An apparatus (1) in accordance with claim 1 or claim 2, **characterized in that** the first grating period (g0) of the first diffraction grating (BG0) is smaller than the second grating period (g1) of the second diffraction grating (BG1) such that the second diffraction grating (BG1) generates a high-resolution signal and the first diffraction grating generates a signal of lower resolution.

4. An apparatus (1) in accordance with at least one of the preceding claims, **characterized in that** the first and second diffraction grating pairs (BP2, BP2A) each have a diffraction grating (BG2, BG2A) for diffracting the transmitted light in the +1 st and -1 st order diffraction beams (BS2, BS2A) and each have a recombination grating (RE2, RE2A) for combining the diffraction beams (BS2, BS2A) to form the interference beams (IS2, IS2A) or each have two diffraction gratings (BG2, BG2A) for diffracting the transmitted light in +1 st and -1 st order diffraction beams (BS2, B2A).

5. An apparatus (1) in accordance with at least one of the preceding claims, **characterized in that** two light sources (2, 2A) are provided for transmitting the light beams (L2, L2A) or a beam splitter (5) is provided which divides the transmitted light of the light source (2) into the light beams (L2, L2A) and two mirrors (Sp1, Sp2) are provided which reflect the light beams (L2, L2A) in the direction of the receivers (4, 4A).

6. An apparatus (1) in accordance with claim 5, **characterized in that** the two light sources (2, 2A) or the two mirrors (Sp1, Sp2) are arranged with respect to one another such that the two directions of irradiation (S2, S2A) of the light beams (L2, L2A) intersect perpendicularly in the interior of the standard (3).

7. An apparatus (1) in accordance with claim 4 or claim 5, **characterized in that** either the diffraction grating (BG2, BG2A) or the recombination grating (RE2, RE2A) of the first and second diffraction grating pairs (BP2, BP2A) has at least two phase-shifted grating periods (g2, g2A).

8. An apparatus (1) in accordance with any one of the claims 4 to 6, **characterized in that** the diffraction grating (BG2, BG2A) and the recombination grating (RE2, RE2A) of the respective first and second diffraction grating pairs (BP2, BP2A) are arranged at a defined spacing (d2, d2A) from the first and second diffraction gratings (BG0, BG1); and/or **in that** the diffraction grating (BG2, B2A) and the recombination grating (RE2, RE2A) of the respective first and second diffraction grating pairs (BP2, BP2A) have suitable grating periods for a geometrical directing of the light beams (L2, L2A) towards one another.

9. An apparatus (1) in accordance with any one of the preceding claims, **characterized in that** the first and second diffraction grating pairs (BP2, BP2A) are arranged outside or inside the standard (3).

10. A method for a diffractive measurement of an angle of rotation of two objects rotating relative to one another, comprising the steps:
- transmitting light beams (L2, L2A) by means of at least one light source (2, 2A);
- diffracting the light beams (L2, L2A) by means of diffraction gratings (BG2, BG2A) so that +1 st and -1 st order diffraction beams (BS2, BS2A) are generated by each light beam (L2, L2A);
- irradiating a cylindrical standard (3) with the +1 st and -1 st order diffraction beams (BS2, BS2A) from two different directions of irradiation (S2, S2A);
- diffracting the +1 st and -1 st order diffraction beams (BS2, BS2A) by means of at least one first and one second diffraction grating (BG0, BG1) of the cylindrical standard (3) such that the diffraction beams (BS2, BS2A) are generated with a relative phase shift;
- combining the +1 st and -1 st order diffraction beams (BS2, BS2A) to form respective interference beams (IS2, IS2A) by means of recombination gratings (RE2, RE2A);
- receiving the combined interference beams (IS2, IS2A) by means or respective receivers (4, 4a);
- generating signals from the interference beams (IS2, IS2A) in dependence on a rotation of the standard (3) such that signals having different resolutions are generated for the respective directions of irradiation (S2, S2A);
- comparing the generated signals having different resolutions and the different directions of irradiation (S2, S2A) with one another for compensating a signal error; and
- determining the angle of rotation.

11. A method for a diffractive measurement of an angle of rotation of two objects rotating relative to one another, comprising the steps:
- transmitting light beams (L2, L2A) by means of at least one light source (2, 2A);
- radially irradiating a cylindrical standard (3) by the light beams (L2, L2A) from two different directions of irradiation (S2, S2A) so that +1 st and -1 st order diffraction beams are generated from each light beam (L2, L2A) by means of first and second diffraction gratings (BG0, BG1);
- diffracting the +1 st and -1 st order diffraction beams by means of diffraction gratings (BG2, BG2A) such that the +1 st and -1 st order diffraction beams intersect;
- combining the +1 st and -1 st order diffraction beams by means of the first and second diffraction gratings (BG0, BG1) to form interference beams (IS2, IS2A);
- receiving the interference beams (IS2, IS2A) by means or respective receivers (4, 4a);
- generating signals from the interference beams (IS2, IS2A) in dependence on a rotation of the standard (3) such that signals having different resolutions are generated for the respective directions of irradiation (S2, S2A);
- comparing the generated signals having different resolutions and the different directions of irradiation (S2, S2A) with one another for compensating a signal error; and
- determining the angle of rotation.

12. A method in accordance with claim 10 or claim 11, wherein a high-resolution signal and a signal of lower resolution are determined with respect to a rotation of the standard (3) by the different directions of irradiation (S2, S2A) and by the first and second diffraction gratings (BG0, BG1).

13. A method in accordance with at least one of the preceding claims 10 to 12, wherein the cylindrical standard (3) is irradiated by two light sources (2, 2A) which are spaced apart at a defined angle from one another.

14. A method in accordance with at least one of the preceding claims 10 to 12, wherein the transmitted light is divided by a beam splitter (5) onto two mirrors (Sp1, Sp2) and is directed onto the standard (3) from the different directions of irradiation (S2, S2A) by the two mirrors (Sp1, Sp2).

15. A method in accordance with any one of the preceding claims, wherein a period of a signal of lower resolution is compared with a plurality of periods of a high-resolution signal such that a large signal error is clearly identified.

## Revendications

1. Dispositif (1) pour la mesure par diffraction d'un angle de rotation de deux objets en rotation l'un par rapport à l'autre, incluant au moins une source de lumière (2, 2A) qui émet de la lumière,
deux paires de réseaux de diffraction (BP2, BP2A) stationnaires par rapport à la source de lumière (2, 2A),
un élément de mesure matérialisé (3) cylindrique, en rotation relative par rapport à la source de lumière (2, 2A) et traversé radialement par les rayons de lumière (L2, L2A),
au moins deux récepteurs photosensibles (4, 4A) pour la réception des rayons de lumière (L2, L2A), et
une unité d'évaluation (10),
**caractérisé en ce que**
la lumière émise est susceptible d'être organisée en deux rayons de lumière (L2, L2A) s'étendant perpendiculairement l'un à l'autre avec des directions de rayonnement respectives (S2, S2A), les rayons de lumière (L2, L2A) incluant, selon le lieu le long des directions de rayonnement (S2, S2A), des rayons de diffraction (BS2, BS2A) du premier ordre positif et du premier ordre négatif, ou des rayons d'interférence (IS2, IS2A), dans lequel la première paire de réseaux de diffraction (BP2) est traversée par le premier rayon de lumière (L2) et la seconde paire de réseaux de diffraction (BP2A) est traversée par le second rayon de lumière (L2A),
l'élément de mesure matérialisé cylindrique (3) inclut au moins un premier et un second réseau de diffraction (BG0, BG1) agencés le long d'une périphérie de l'élément de mesure matérialisé (3), dans lequel le premier réseau de diffraction (BG0) de l'élément de mesure matérialisé (3) présente une première période de réseau (g0) et le second réseau de diffraction (BG1) de l'élément de mesure matérialisé (3) présente une seconde période de réseau (g1) différente de la première période de réseau (g0),
dans lequel un récepteur respectif (4, 4A) est associé au rayon d'interférence (IS2, IS2A) d'un rayon de lumière (L2, L2A) et lors d'une rotation de l'élément de mesure matérialisé (3) deux signaux avec des résolutions différentes sont susceptibles d'être générés à partir des rayons d'interférence respectifs (IS2, IS2A), et
l'unité d'évaluation (10) est prévue pour comparer les signaux en vue d'une compensation d'une erreur de signal et pour déterminer l'angle de rotation.

2. Dispositif (1) selon la revendication 1, **caractérisé en ce que** le premier et le second réseau de diffraction (BG0, BG1) sont prévus sous forme d'une première et d'une seconde piste dimensionnelle sur l'élément de mesure matérialisé cylindrique (3), et dans lequel la première et la seconde piste dimensionnelle sont agencées en étant imbriquées l'une dans l'autre.

3. Dispositif (1) selon la revendication 1 ou 2, **caractérisé en ce que** la première période de réseau (g0) du premier réseau de diffraction (BG0) est plus petite que la seconde période de réseau (g1) du second réseau de diffraction (BG1), de sorte que le second réseau de diffraction (BG1) engendre un signal à haute résolution et que le premier réseau de diffraction (BG1) engendre un signal à plus faible résolution.

4. Dispositif (1) selon l'une au moins des revendications précédentes, **caractérisé en ce que** la première paire et la seconde paire de réseaux de diffraction (BP2, BP2A) comprennent chacune un réseau de diffraction (BG2, BG2A) pour diffracter la lumière émise en donnant les rayons de diffraction (BS2, BS2A) du premier ordre positif et du premier ordre négatif, et comprennent un réseau de recombinaison (RE2, RE2A) pour réunir les rayons diffractés (BS2, BS2A) en donnant les rayons d'interférence (IS2, IS2A), ou respectivement deux réseaux de diffraction (BG2, BG2A) pour diffracter la lumière émise en donnant des rayons de diffraction (BS2, BS2A) du premier ordre positif et du premier ordre négatif.

5. Dispositif (1) selon l'une au moins des revendications précédentes, **caractérisé en ce qu'**il est prévu deux sources de lumière (2, 2A) pour émettre les rayons de lumière (L2, L2A), ou bien un diviseur de rayons (5) qui subdivise la lumière émise de la source de lumière (2) en donnant les rayons de lumière (L2, L2A), et deux miroirs (Spl, Sp2) qui réfléchissent les rayons de lumière (L2, L2A) en direction des récepteurs (4, 4A).

6. Dispositif (1) selon la revendication 5, **caractérisé en ce que** les deux sources de lumière (2, 2A) sont agencées l'une par rapport à l'autre ou les deux miroirs (Spl, Sp2) sont agencés l'un par rapport à l'autre de telle manière que les deux directions de rayonnement (S2, S2A) des rayons de lumière (L2, L2A) se croisent perpendiculairement à l'intérieur de l'élément de mesure matérialisé (3).

7. Dispositif (1) selon la revendication 4 ou 5, **caractérisé en ce que** soit le réseau de diffraction (BG2, BG2A) soit le réseau de recombinaison (RE2, RE2A) de la première et de la seconde paire de réseaux de diffraction (BP2, BP2A) présentent au moins deux périodes de réseau (g2, g2A) décalées en phase.

8. Dispositif (1) selon l'une des revendications 4 à 6, **caractérisé en ce que** le réseau de diffraction (BG2, BG2A) et le réseau de recombinaison (RE2, RE2A) de la première et de la seconde paire de réseaux de diffraction respectifs (BP2, BP2A) sont agencés à une distance définie (d2, d2A) du premier et du second réseau de diffraction (BG0, BG1), et/ou **en ce que** le réseau de diffraction (BG2, BG2A) et le réseau de recombinaison (RE2, RE2A) de la première et de la seconde paire respective de réseaux de diffraction (BP2, BP2A) présentent l'un par rapport à l'autre des périodes de réseau appropriées pour la déflexion géométrique des rayons de lumière (L2, L2A).

9. Dispositif (1) selon l'une des revendications précédentes, **caractérisé en ce que** la première et la seconde paire de réseaux de diffraction (BP2, BP2A) sont agencées à l'extérieur ou à l'intérieur de l'élément de mesure matérialisé (3).

10. Procédé pour la mesure par diffraction d'un angle de rotation de deux objets en rotation l'un par rapport à l'autre, avec les étapes suivantes :
- on émet des rayons de lumière (L2, L2A) au moyen d'au moins une source de lumière (2, 2A) ;
- on diffracte les rayons de lumière (L2, L2A) au moyen de réseaux de diffraction (BG2, BG2A), de sorte que l'on génère à partir de chaque rayon de lumière (L2, L2A) des rayons diffractés (BS2, BS2A) du premier ordre positif et du premier ordre négatif ;
- on envoie sur un élément de mesure matérialisé cylindrique (3) les rayons diffractés (BS2, BS2A) du premier ordre positif et du premier ordre négatif depuis des directions de rayonnement différentes (S2, S2A) ;
- on diffracte les rayons diffractés (BS2, BS2A) du premier ordre positif et du premier ordre négatif au moyen d'au moins un premier et un second réseau de diffraction (BG0, BG1) de l'élément de mesure matérialisé (3), de telle sorte que les rayons diffractés (BS2, BS2A) sont engendrés avec un décalage de phase relatif ;
- on réunit les rayons diffractés (BS2, BS2A) du premier ordre positif et du premier ordre négatif pour donner des rayons d'interférence respectifs (IS2, IS2A) au moyen de réseaux de recombinaison (RE2, RE2A) ;
- on reçoit les rayons d'interférence réunis (IS2, DS2A) au moyen de récepteurs respectifs (4, 4A) ;
on engendre des signaux à partir des rayons d'interférence (IS2, IS2A) en fonction d'une rotation de l'élément de mesure matérialisé (3), de sorte que l'on engendre des signaux avec des résolutions différentes pour les directions de rayonnement respectives (S2, S2A) ;
- on compare les signaux engendrés avec des résolutions différentes et les directions de rayonnement différentes (S2, S2A) les uns par rapport aux autres pour la compensation d'une erreur de signal ; et
- on détermine l'angle de rotation.

11. Procédé pour la mesure par diffraction d'un angle de rotation de deux objets en rotation l'un par rapport à l'autre, avec les étapes suivantes :
- on émet des rayons de lumière (L2, L2A) au moyen d'au moins une source de lumière (2, 2A) ;
- on envoie sur un élément de mesure matérialisé cylindrique (3) les rayons de lumière (L2, N2A) depuis deux directions de rayonnement différentes (S2, S2A), de sorte que l'on engendre à partir de chaque rayon de lumière (L2, L2A) des rayons diffractés du premier ordre positif et du premier ordre négatif au moyen d'un premier et d'un second réseau de diffraction (BG0, BG1) ;
- on diffracte les rayons diffractés du premier ordre positif et du premier ordre négatif au moyen de réseaux de diffraction (BG2, BG2A), de sorte que les rayons diffractés du premier ordre positif et du premier ordre négatif se croisent ;
- on réunit les rayons diffractés du premier ordre positif et du premier ordre négatif au moyen du premier et du second réseau de diffraction (BG0, BG1) pour donner des rayons d'interférence (IS2, IS2A) ;
- on reçoit les rayons d'interférence (IS2, IS2A) au moyen de récepteurs respectifs (4, 4A) ;
- on engendre des signaux à partir des rayons d'interférence (IS2, IS2A) en fonction d'une rotation de l'élément de mesure matérialisé (3), de sorte que l'on engendre des signaux avec des résolutions différentes pour les directions de rayonnement respectives (S2, S2A) ;
- on compare les signaux engendrés avec des résolutions différentes et avec les directions de rayonnement différentes (S2, S2A) les uns par rapport aux autres pour la compensation d'une erreur de signal ; et
- on détermine l'angle de rotation.

12. Procédé selon la revendication 10 ou 11, dans lequel au moyen des directions de rayonnement différentes (S2, S2A) et du premier et du second réseau de diffraction (BG0, BG1) on détermine un signal à haute résolution et un signal à plus faible résolution en donnant une rotation de l'élément de mesure matérialisé (3).

13. Procédé selon l'une au moins des revendications précédentes 10 à 12, dans lequel l'élément de mesure matérialisé cylindrique (3) est éclairé avec deux sources de lumière (2, 2A), qui sont agencées à distance l'une de l'autre sous un angle prédéfini.

14. Procédé selon l'une au moins des revendications précédentes 10 à 12, dans lequel la lumière émise est subdivisée par un diviseur de rayons (5) vers de miroir (Sp1, Sp2) et est renvoyée par les deux miroirs (Sp1, Sp2) dans les directions de rayonnement différentes (S2, S2A) vers l'élément de mesure matérialisé (3).

15. Procédé selon l'une des revendications précédentes, dans lequel une période d'un signal à plus faible résolution est comparée avec plusieurs périodes d'un signal à haute résolution, de sorte que l'on identifie de manière univoque une erreur de signal importante.
